# EUROPÄISCHE PATENTANMELDUNG

(11) **EP 0 672 853 A1**
(43) Veröffentlichungstag der Anmeldung: **20.09.1995**
(21) Anmeldenummer: 95102645.9
(22) Anmeldetag: 24.02.1995
(51) Int. Cl.: F16K 3/06, F16K 3/02

(54) **Absperrschieber für Rohrleitungen**

(30) Priorität: 03.03.1994 DE 9403604 U
(71) Anmelder: P+S ARMATUREN GmbH, 66482 Zweibrücken (DE)
(72) Erfinder: Schmitt, Hilmar, D-66482 Zweibrücken (DE)
(74) Vertreter: Patentanwälte Möll und Bitterich

(57) **Zusammenfassung**

Ein Absperrschieber für Rohrleitungen besteht aus einem Hauptschieber und bis zu zwei Ausblaseinheiten (20). Der Hauptschieber besitzt ein Gehäuse (1) mit Bodenplatte (2) und Deckelplatte (3), eine Schieberplatte (4) mit Öffnung (5), eine Spindel (6) zum Heben und Senken der Schieberplatte (4) und zwei Anschlußrohrstutzen (7, 7') am Gehäuse (1). In die der Schieberplatte (4) zugewandten Enden der Anschlußrohrstutzen (7, 7') ist je ein Dichtring (8) eingesetzt. Zur Abdichtung zwischen Anschlußrohrstutzen (7, 7') und Dichtring (8) ist ein axial und radial dichtender O-Ring (9), zur Abdichtung zwischen Dichtring (8) und Schieberplatte (4) ein axial dichtender O-Ring (10), der in einer Ringnut sitzt, vorgesehen. Die verlängerte Deckelplatte (3) des Hauptschiebers trägt gleichzeitig die Ausblaseinheiten (20). Die Ausblaseinheit (20) umfaßt eine Schwenkplatte (23) mit öffnung und zwei Dichtringe (25, 26), die gegen die Schwenkplatte (23) dichten, und zwar wie beim Hauptschieber mit Hilfe von O-Ringen. Die Konstruktion ist völlig ölfrei. Die Dichtringe sind optimal gegen Beschädigungen geschützt. Die Anpreßkräfte und der Verschleiß sind minimal.

## Beschreibung

Die Erfindung betrifft Absperrschieber für Rohrleitungen gemäß dem Oberbegriff des Anspruchs 1.

In früheren Zeiten standen Absperreinrichtungen für Gas- und Wasserrohre nicht im besten Ruf. Der Grund dafür waren Ansammlungen von Rost und Kalk im Schiebersack, die den dichten Schluß der Schieber verhinderten. Hoher Wasserdampfgehalt mit Spuren von Sauerstoff führten in vielen Gasrohrnetzen zum großflächigen Anrosten der Stahlrohre. Der abfallende Rost wurde im Gasstrom bewegt, zu feinem Staub zermahlen und blieb schließlich im Schiebersack liegen, wo er sich verfestigte und auch am sogenannten Staubsackschieber nicht mehr ausgeblasen werden konnte.

In Klappenschiebern wurden die Dichtringe von harten, fest haftenden Ablagerungen im Wasserrohrnetz zerkratzt. Im Gasrohrnetz behinderte der Staub den Schließvorgang. Dies führte dazu, daß in Gasrohrnetzen nur der infolge seiner Einfachheit nicht störanfällige Absperrtopf den Anforderungen des täglichen Betriebs genügte. Dessen Einsatz ist jedoch auf Netze mit sehr niedrigem Innendruck beschränkt. Für Wasserrohrnetze gab es lange Zeit überhaupt keine zuverlässig schließenden Absperreinrichtungen.

Die bahnbrechende Entwicklung für Gasrohrnetze waren die Einplattenschieber und um 1950 die Dreiplattenschieber. Beim Einplattenschieber wird eine gelochte Platte parallel zu zwei Dicht ringen geschoben und gezogen. Beim Schließen gleitet das Loch aus dem freien Querschnitt: die Platte sperrt. Die polierten Dichtflächen und die empfindlichen Dichtungen werden nur während des öffnens und Schließens mit Staub beschossen; dabei können die im Gasstrom rasch bewegten Teilchen die Dichtelemente und Dichtflächen beschädigen.

Beim Dreiplattenschieber dagegen gleitet die gelochte Schieberplatte parallel und spaltfrei zwischen zwei in gleicher Weise einseitig planeben bearbeiteten Seitenplatten. Diese Anordnung bietet den Vorteil, daß kein Dichtring über die Dichtflächen gezogen und dabei durch schnell bewegte Teilchen gefährdet wird. Die erforderliche Anpreßkraft erzeugen auf Druck vorgespannte Federpakete. Abdichtend wirkt ein hauchdünner ölfilm zwischen den drei metallischen Platten. Um diese Abdichtung über Jahrzehnte sicherzustellen, ist das Schiebergehäuse mit öl gefüllt.

Da ein ölfilm kleinste Gasmengen durchkriechen läßt, baut sich im Schiebergehäuse langsam der in der Leitung anstehende Druck auf. Wird nun der Schieber geschlossen, drückt der auf der Zuströmseite (Eingangsseite) anstehende Gasdruck die Schieberplatte und mit ihr die beiden Seitenplatten zur Abströmseite (Ausgangsseite) hin. Dadurch werden die dortigen Druckfedern mehr gespannt, wodurch die Dichtwirkung, aber auch der Verschleiß zunehmen. Zu der Erhöhung des Anpreßdrucks zwischen Schieberplatte und abströmseitiger Seitenplatte addiert sich noch der Gehäuseinnendruck; der Dreiplattenschieber dichtet ausgangsseitig. Die Summe dieser Effekte führt zu der nunmehr seit Jahrzehnten bekannten und bewährten Dichtigkeit und Betriebssicherheit der Dreiplattenschieber, die ohne elastische Dichtungen im Gasstrom auskommen.

Bei handelsüblichen Dreiplattenschiebern bestehen die drei Metallplatten aus Stahl oder Gußeisen. An beiden Seitenplatten ist ein Rohrstutzen angeformt, der mit Hilfe von Dichtringen längsverschieblich in den Rohranschlußstutzen des Schiebers angeordnet ist. Aufgrund von Material und Form der metallischen Platten sind bei der Exaktheit der Oberflächenbearbeitung der Dichtflächen Grenzen gesetzt. Die handelsüblichen Schieber sind daher nur bis zu bestimmten Nennweiten und Netzdrücken einsetzbar. Eine Netzdruckerhöhung wäre nur möglich, wenn durch die Verwendung stärkerer Druckfedern der Anpreßdruck zwischen den metallischen Platten erhöht würde; allerdings würden die Schieber dann noch schwergängiger, als sie jetzt schon sind, und auch einem erhöhten Verschleiß unterliegen.

Eine Darstellung der ölgefüllten Dreiplattenschieber findet sich beispielsweise in der DE-Zeitschrift "3 R international", Heft 8, Oktober 1989 in dem Aufsatz: "Schieber-Ausbläser-Einheit als Fertigteil für Gasleitungen aller Druckstufen". Eine verbesserte Konstruktion ist Gegenstand des DE-U 92 12 505. Beispiele von Einplattenschiebern finden sich in EP-A-0 141 023, DE-A-36 16 361, DE-U-88 00 803, DE-A-23 32 642, DE-C-40 37 862 usw.

Ausgehend von diesem Stand der Technik liegt der vorliegenden Erfindung die Aufgabe zugrunde, einen Absperrschieber der eingangs genannten Art anzugeben, der nur einem geringen Verschleiß unterliegt und nur geringe Betätigungskräfte benötigt.

Diese Aufgabe wird gelöst durch einen Absperrschieber mit den Merkmalen des Anspruchs 1.

Obwohl der erfindungsgemäße Absperrschieber nur eine Schieberplatte und keine metallischen Seitenplatten besitzt, ist der Kontakt zwischen Schieberplatte und den seitlichen Dichtringen metallisch. Die für die Abdichtung verantwortlichen O-Ringe sind auf diese Weise optimal geschützt und können daher ihre Dichtfunktion über lange Zeit erfüllen. Ein wesentlicher Vorteil ist ferner, daß zum Anpressen der Dichtringe an die Schieberplatte keine Federpakete mehr erforderlich sind; vielmehr genügt der von den O-Ringen, die die Dichtringe gegenüber den Anschlußrohrstutzen abdichten, erzeugte Druck völlig. Dadurch wird die Konstruktion sehr einfach, raumsparend und preiswert, ohne daß Abdichtung und Lebensdauer darunter leiden.

Im gleichen Sinne wirkt die Tatsache, daß sowohl die Anschlußrohrstutzen als auch die Dichtringe einfache Drehteile sind, die hochpräzise und trotzdem kostengünstig hergestellt werden können.

Gemäß einer vorteilhaften Ausgestaltung der Erfindung sitzt der zwischen Anschlußrohrstutzen und Dichtring abdichtende erste O-Ring in einer stirnseitigen Ringnut des Dichtrings oder des Anschlußrohrstutzens. Auf diese Weise wird sowohl die Abdichtung gegen das Gehäuse als auch der axiale Anpreßdruck der Dichtringe gegen die Schieberplatte erzeugt.

Vorzugsweise sitzt der erste O-Ring jedoch in einer Ringnut des Dichtrings, die sowohl axial wie radial offen ist. Man erreicht auf diese Weise mit nur einem Dichtring eine ausreichende Pressung und Abdichtung.

Zur seitlichen Führung der Schieberplatte beim Heben und Senken sind Führungsnasen angeformt, die sich gegen die Gehäusewand abstützen.

Das Gehäuse selbst besteht vorteilhafterweise aus einem Stück Rechteckrohr, an das Bodenplatte und Deckelplatte sowie die beiden Anschlußrohrstutzen angeschweißt werden.

Gemäß einer vorteilhaften Weiterbildung der Erfindung ist die Deckelplatte seitlich verlängert und trägt wenigstens einen Ausblaseschieber. Derartige Schieber-Ausbläser-Einheiten haben sich bereits seit langem bewährt.

Vorteilhafterweise umfaßt der Ausblaseschieber eine Schwenkplatte mit einer öffnung und zwei Dichtringen, die gegen die Schwenkplatte dichten. Dabei können Schwenkplatte und Dichtringe entweder als herkömmlicher Einplatten-Schieber mit rein metallischer Dichtung, Federpaketen und ölfüllung ausgebildet sein oder vorzugsweise in der erfindungsgemäßen Technik ohne Federpaket und ölfüllung, aber mit zwei O-Ringen. Damit stellen sich auch beim Ausblaseschieber dieselben Vorteile ein, wie sie bezüglich des Hauptschiebers bereits erläutert wurden.

Dank der verringerten Anpreßkräfte kann die Schwenkplatte jetzt mittels Schwenkachse direkt betätigt werden. Untersetzungsgetriebe wie bisher können entfallen.

Eine weitere Reduzierung der Betätigungskräfte und des Verschleißes läßt sich erreichen, wenn die Oberflächen von Schieber- und Schwenkplatte verschleißfest und/oder gleitfähig beschichtet werden

Anhand der Zeichnung soll die Erfindung in Form von Ausführungsbeispielen näher erläutert werden. Es zeigen
- Fig. 1: einen Längsschnitt durch einen ersten Absperrschieber,
- Fig. 2: ausschnittsweise einen weiteren, um 90 Grad gedrehten Längsschnitt durch den Absperrschieber der Fig. 1,
- Fig. 3: einen Längsschnitt durch einen zweiten Absperrschieber mit zwei integrierten Ausblaseinheiten und
- Fig. 4: eine nur teilweise aufgebrochene Ansicht des Absperrschiebers der Fig. 3 in der Einbausituation unter einer Straße.

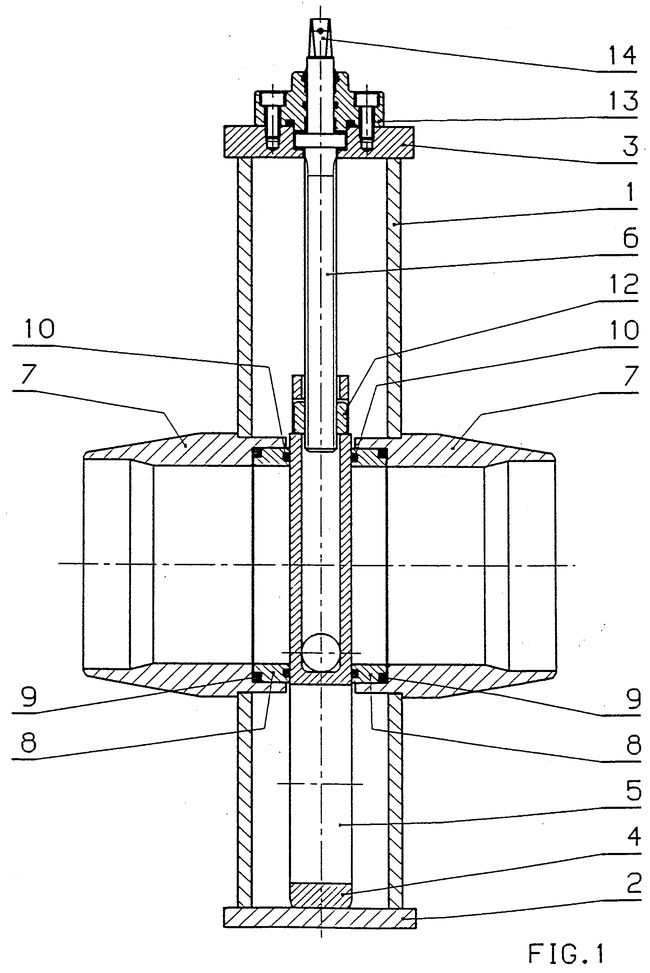

Fig. 1 zeigt einen Absperrschieber, dessen Gehäuse 1 aus einem Stück Rechteckrohr besteht, unten und oben verschlossen mittels einer Bodenplatte 2 und einer Deckelplatte 3. In die Wände des Gehäuses 1 sind Anschlußrohrstutzen 7 eingeschweißt.

Im Inneren des Gehäuses 1 erkennt man eine Schieberplatte 4 mit einer Durchgangsöffnung 5 entsprechend der Nennweite des Absperrschiebers. Die Schieberplatte 4 befindet sich in Sperrposition. Zum Heben und Senken der Schieberplatte 4 dient eine Gewindespindel 6, die mit einer Spindelmutter 12 in der Schieberplatte 4 zusammenwirkt. Oberhalb des Spindelbundes sitzt die Gewindespindel 6 in einem Aufsatz 13. Das obere Ende ist als Vierkant 14 ausgebildet.

Die der Schi eberplatte 4 zugewandten Enden der Anschlußrohrstutzen 7 besitzen eine Ausdrehung, in die Dichtringe 8 längsbeweglich eingesetzt sind. Die Abdichtung zwischen Anschlußrohrstutzen 7 und Dichtring 8 übernimmt ein erster O-Ring 9, eingesetzt in eine sowohl axial als auch radial offene Ringnut des Dichtrings 8. Der O-Ring 9 wird so optimal angepreßt und gegen Verformung geschützt. Er ist so dimensioniert, daß er den Dichtring 8 axial an die Schieberplatte 4 andrückt.

Die Dichtringe 8 besitzen an ihrer der Schieberplatte 4 zugewandten Stirnfläche eine Ringnut, in die ein zweiter O-Ring 10 eingelegt ist. Dieser sorgt für die eigentliche Abdichtung zwischen Schieberplatte 4 und Dichtringen 8, ist jedoch dank seiner Position in einer Ringnut optimal gegen mechanische Belastung und Verschleiß geschützt.

Die Dichtflächen der Schieberplatte 4 können zusätzlich verschleißfest bzw. gleitfähig beschichtet sein. Dadurch werden Verschleiß und Betätigungskräfte weiter verringert, die Lebensdauer erhöht. Ein ölfilm, aufrechterhalten durch eine komplette ölfüllung des Gehäuses 1, ist entbehrlich.

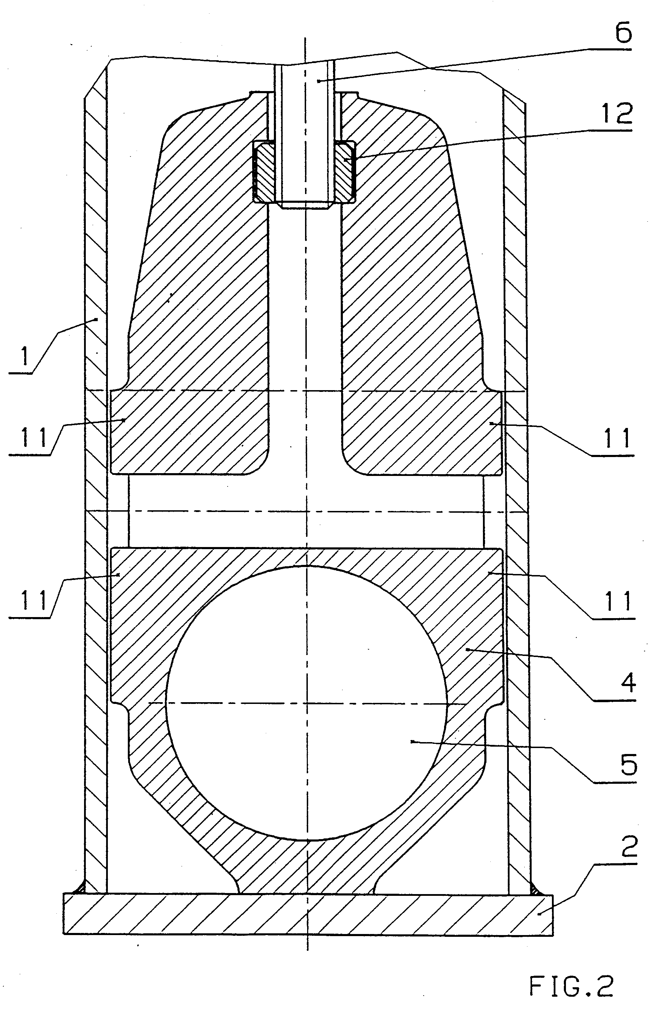

Fig. 2 zeigt ausschnittsweise einen weiteren Längsschnitt, um 90 Grad gedreht, durch den Absperrschieber der Fig. 1. Man erkennt insbesondere Form und Konstruktion der Schieberplatte 4 mit Durchlaßöffnung 5, der Gewindespindel 6 und der Spindelmutter 12. Seitlich an der Absperrplatte 4 sind Führungsnasen 11 angeformt, die die Schieberplatte 4 beim Heben und Senken im Gehäuse 1 zentrieren.

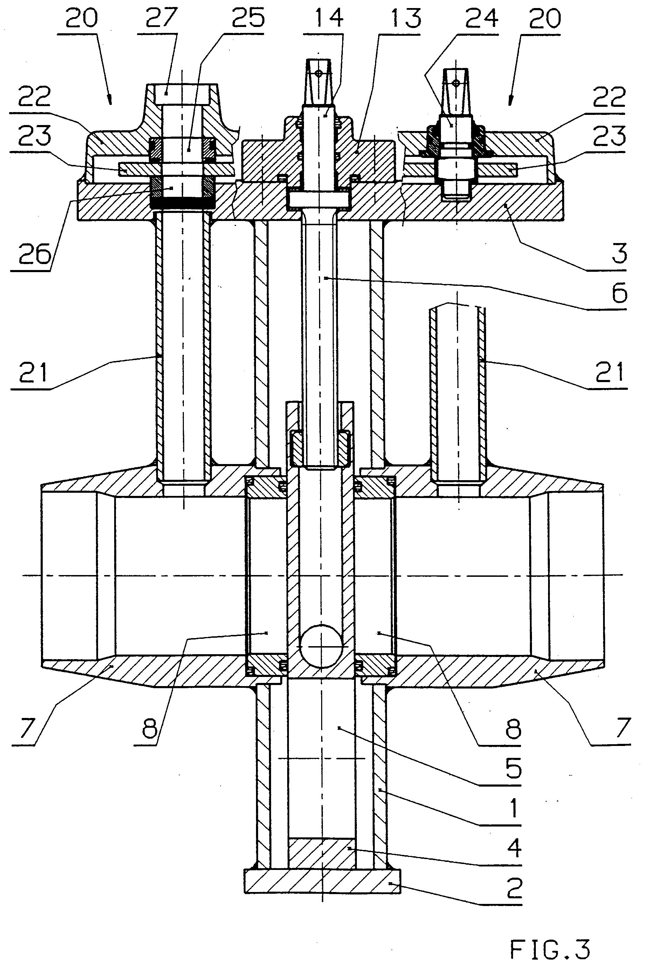

Fig. 3 zeigt als weitere Ausführungsform einen Absperrschieber, der durch zwei Ausblaseinheiten 20 ergänzt wurde. Zu diesem Zweck sind die Deckelplatte 3 und die Anschlußrohrstutzen 7' seitlich verlängert. Rohrleitungen 21 stellen die Verbindung zwischen den Anschlußrohrstutzen 7' und den Ausblaseinheiten 20 her.

Die Ausblaseschieber sind mit Schwenkplatten 23 versehen, die an einer senkrechten Schwenkachse 24 gelagert sind und mittels Vierkant von oben betätigt werden. Die Abdichtung zwischen Schwenkplatte 23 und Ausblasegehäuse 22 erfolgt über Dichtringe 25, 26. Der eingangsseitige Dichtring 26 ist gemäß dem Stand der Technik ausgeführt und muß daher mittels Federpaketen an die Schwenkplatte 23 angepreßt werden. Der ausgangsseitige Dichtring 25 dagegen ist in der anhand des Hauptschiebers bereits beschriebenen Technik mit zwei O-Ringen ausgeführt. Bei Offenstellung des Ausblaseschiebers verläßt das Medium die Ausblaseinheit 20 über eine Ausblasöffnung 27.

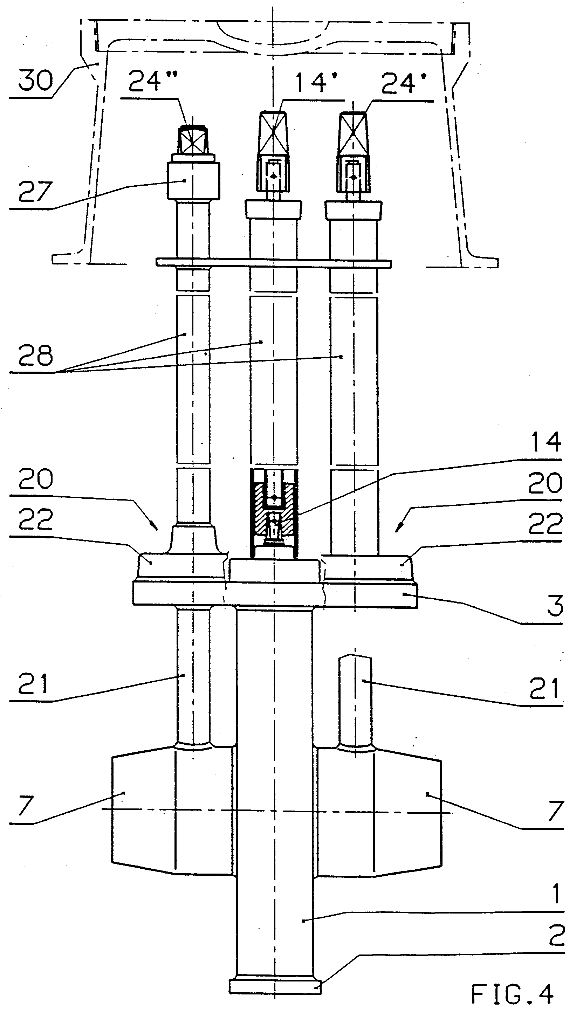

Fig 4 zeigt die Einbausituation des kombinierten Absperrschiebers der Fig. 3 unter einer Straßenkappe 30. Auf Hauptschieber und Ausblaseinheiten 20 ist eine Einbaugarnitur 28 aufgesetzt, so daß die Betätigungsvorrichtungen 14', 24' sowie die Verschlußschraube 24'' bequem von oben zu erreichen sind.

## Patentansprüche

1. Absperrschieber für Rohrleitungen, umfassend ein Gehäuse (1) mit Bodenplatte (2) und Deckelplatte (3), eine Schieberplatte (4) mit einer öffnung (5), eine Spindel (6) zum Heben und Senken der Schieberplatte (4), zwei Anschlußrohrstutzen (7, 7') am Gehäuse (1) und gegebenenfalls wenigstens eine Ausblaseinheit (20), dadurch gekennzeichnet, daß in das der Schieberplatte (4) zugewandte Ende der Anschlußrohrstutzen (7, 7') ein gesonderter Dichtring (8) eingesetzt ist, daß zur Abdichtung zwischen Anschlußrohrstutzen (7, 7') und Dichtring (8) ein erster axial dichtender O-Ring (9) vorgesehen ist und daß zur Abdichtung zwischen Dichtring (8) und Schieberplatte (4) ein zweiter axial dichtender O-Ring (10) vorgesehen ist.

2. Absperrschieber nach Anspruch 1, dadurch gekennzeichnet, daß der erste O-Ring (9) in eine stirnseitige Ringnut des Dichtrings (8) oder des Anschlußrohrstutzens (7) eingesetzt ist.

3. Absperrschieber nach Anspruch 1, dadurch gekennzeichnet, daß der erste O-Ring (9) in eine sowohl axial wie radial offene Ringnut des Dichtrings (8) eingesetzt ist.

4. Absperrschieber nach einem der Ansprüche 1 bis 3, dadurch gekennzeichnet, daß an der Schieberplatte (4) seitliche Führungsnasen (11) angeformt sind.

5. Absperrschieber nach einem der Ansprüche 1 bis 4, dadurch gekennzeichnet, daß das Gehäuse (1) aus einem Stück Rechteckrohr besteht.

6. Absperrschieber nach einem der Ansprüche 1 bis 5, dadurch gekennzeichnet, daß die Deckelplatte (3) seitlich verlängert ist und wenigstens eine Ausblaseinheit (20) trägt.

7. Absperrschieber nach Anspruch 6, dadurch gekennzeichnet, daß die Ausblaseinheit (20) eine Schwenkplatte (23) mit einer Öffnung und zwei Dichtringen (25, 26) umfaßt, wobei die Dichtringe (25, 26) gegen die Schwenkplatte (23) dichten.

8. Absperrschieber nach Anspruch 7, dadurch gekennzeichnet, daß wenigstens ein Dichtring (25) der Ausblaseinheit (20) mittels drittem O-Ring axial gegen die Schwenkplatte (23) und mittels viertem O-Ring radial gegen das Gehäuse (22) der Ausblaseinheit (20) abgedichtet ist.

9. Absperrschieber nach einem der Ansprüche 6 bis 8, dadurch gekennzeichnet, daß an der Schwenkplatte (23) eine Schwenkachse (24) direkt befestigt ist.

10. Absperrschieber nach einem der Ansprüche 1 bis 9, dadurch gekennzeichnet, daß die Oberflächen von Schieber- und Schwenkplatte (4, 23) verschleißfest und/oder gleitfähig beschichtet sind.
